# EUROPEAN PATENT APPLICATION

(11) **EP 4 776 359 A1**
(43) Date of publication of application: **15.07.2026**
(21) Application number: 25224152.6
(22) Date of filing: 16.12.2025
(51) Int. Cl.: H01M 10/04, H01M 50/209, H01M 50/211, H01M 50/264

(54) **ELECTRIC BATTERY PACK AND METHOD FOR ITS ASSEMBLY**

(30) Priority: 13.01.2025 IT 202500000405
(71) Applicant: C.R.F. Società Consortile per Azioni, 10043 Orbassano (Torino) (IT)
(72) Inventor: ROSSI, Dario, I-10043 Orbassano (Torino) (IT)
(74) Representative: Buzzi, Notaro & Antonielli d'Oulx S.p.A.

(57) **Abstract**

An electric battery pack (1) comprises a container (2) and a frame (3) inside the container (2), defining a plurality of compartments (4) that receive a plurality of stacks (50) of battery cells (5). Each compartment (4) is defined by two end walls (40, 40') and by two side walls (41). **In** each compartment (4) at least one of said end walls (40') of the compartment is supported by the inner frame (3) in such a way as to be movable in a direction orthogonal to said end wall (40'). An actuator device (9) is associated with the movable wall (40') of each compartment, configured to move the movable wall (40') from a retracted position, further away from the opposite end wall (40) of the same compartment (4), towards an advanced position, in which it applies a pressure on the cell stack (50) in the respective compartment (4).

## Description

### Field of the invention

The present invention relates to electric battery packs of the type comprising:
- a container, including a bottom wall, two longitudinal side walls and two end side walls,
- an inner frame, arranged within the container, and including a plurality of walls defining a plurality of compartments within the container,
- wherein each compartment is defined by two end walls and by two side walls,
- a stack of battery cells, arranged in each of said compartments,
- wherein each stack of battery cells comprises a plurality of battery cells arranged side by side with each other, within a respective compartment, with a separator element interposed between each cell and the other, and with the cells at the two ends of the stack which are facing said end walls of the respective compartment.

### Background of the invention

Various devices and methods for assembling electric battery packs of the type indicated above have been proposed in the past. There is naturally a need to carry out the battery pack assembly operations as quickly as possible, in order to reduce production costs. From this point of view, it is advantageous to first form each cell stack and then position each cell stack thus formed inside the battery pack container. However, these operations require a certain execution precision, both during the formation of each cell stack (a separator layer must be interposed between one cell and the other of each stack), and during the transport of each cell stack (since it is necessary to maintain the geometric configuration of the stack during transport), and in the phase of positioning each cell stack within a respective compartment of the battery container (since it is necessary to avoid the cell pack interfering with the compartment walls during insertion). To the Applicant's knowledge, none of the solutions proposed in the past is capable of optimally solving all the aforementioned problems, while at the same time guaranteeing a simple and fast assembly of the battery pack.

There is therefore a need for further improvements in this field.

Battery pack solutions are known from documents US 11 688 910 B2, US 12 046 767 B2, US 2024/079627 A1, US 2022/367956 A1, EP 4 372 882 A1, US 11 894 570 B2 and US 2023/194613 A1.

### Object of the invention

It is therefore an object of the present invention to produce an electric battery pack configured in such a way as to make the operations of inserting the battery cell stacks into the compartments of the battery pack container simpler, more efficient and faster.

A further object of the invention is to produce a battery pack assembly method that is relatively simple and fast.

A further object of the invention is to further simplify the battery pack assembly method, also with reference to the phase of forming the battery cell stacks and the phase of transporting each stack from a station where the stack is formed to the respective compartment in the battery pack container.

A further object is to achieve all the aforementioned objectives with relatively simple and low-cost means.

### Summary of the invention

In view of achieving one or more of the aforementioned objects, the invention has as its subject an electric battery pack having the characteristics that have been indicated at the beginning of the present description and further characterized by the fact that in each compartment of the battery pack at least one of said end walls of the compartment is supported by said inner frame of the battery pack in such a way as to be movable in a direction orthogonal to said end wall and by the fact that an actuator device is associated with said movable wall of each compartment to move the movable wall from a retracted position, further away from the opposite end wall of the same compartment, towards an advanced position, in which it applies a pressure on the cell pack in the respective compartment.

According to a further aspect, the invention has as its subject a method for assembling a battery pack, comprising:
- providing a container, including a bottom wall, two longitudinal side walls, two end side walls,
- arranging a frame within the container, including a plurality of walls defining a plurality of compartments within the container,
- wherein each compartment is defined by two end walls and by two side walls,
- positioning a stack of battery cells within each of said compartments,
- each stack of battery cells comprising a plurality of battery cells arranged side by side with each other, within a respective compartment, with a separator element interposed between each cell and the other, and with the cells at the two ends of the stack which are facing said end walls of the respective compartment,
said method being characterized by the fact that it further comprises:
- in each compartment, providing at least one of said end walls of the compartment in such a way that said wall is movable in a direction orthogonal to itself, between a retracted position, further away from the opposite end wall of the same compartment, and an advanced position,
- before a cell stack is positioned within a compartment, arranging the movable wall of the compartment in its retracted position, so as to facilitate the positioning of a cell stack within the compartment,
- after a cell stack has been positioned within the compartment, moving said movable wall towards its advanced position, by means of an actuator device, so as to apply a pressure on the cell stack in the respective compartment.

Thanks to the aforementioned characteristics, the electric battery pack according to the invention is simpler and faster to assemble. In particular, the provision of a movable wall at the end of each compartment in the battery pack allows the wall to be arranged in a retracted position, where the insertion into the compartment of a previously formed cell stack is facilitated and free from risks of interference with the compartment walls, while, at the same time, once the cell stack has been placed inside the compartment, the movable wall can be brought to its advanced position to maintain the cell stack within the compartment.

According to a further characteristic of the invention, each cell stack, before being arranged in a compartment of the battery pack, is formed through the following operations:
- associating, to each cell of a plurality of cells, a separator layer, by gluing or welding the separator layer onto one of two opposite main faces of the cell,
- forming a cell stack by means of said plurality of cells with the respective separator layers, on a support surface of a stack forming station without gluing or welding the cells to each other, each cell having respective electrical terminals,
- connecting electrical connection bars to the electrical terminals of the cells,
- applying around the cell stack a plurality of containment straps, to keep the cell stack assembled during transport,
- moving the cells from the stack forming station to a respective compartment of the battery pack, and
- removing said plurality of straps from the cell stack and moving the movable wall of the respective compartment, by means of said actuator device, towards its advanced position, so as to apply a pressure on the cell stack in the respective compartment.

As is evident from the foregoing, each cell stack is formed leaving each cell, with the respective separator layer associated therewith, completely separated from the adjacent cell. In this way, the times and costs that are necessary in known methods wherein the cells of each stack are welded to each other are avoided. At the same time, despite the cells of each stack being separated from one another, they are kept assembled in a group during transport, by the temporary application of containment straps, which can be of any known type used in the packaging field. As also already indicated, the provision of the movable wall of each compartment in a retracted position facilitates the insertion of each cell stack into the respective compartment, after which the containment straps can be removed and the movable wall associated with each compartment can be brought to its advanced position, to maintain the cell stack in position within the battery pack container.

In a concrete embodiment, each movable wall of each compartment of the battery pack has two sides slidably engaged within guide grooves of the side walls of the same compartment.

Furthermore, in said embodiment, the actuator device that commands the movement of the movable wall of each compartment includes a shaft supported rotatably by the inner frame of the battery pack around an axis parallel and adjacent to one or more of said movable walls, and a cam carried by the rotatable shaft in adjacency to each movable wall, in such a way that the cam can be rotated, via said shaft, between an inoperative position, in which the movable wall can be positioned in its retracted position, and an operative position, in which the cam engages the movable wall shifting it towards its advanced position. It can be envisaged that the shaft bearing the cam is rotated manually, for example by means of a maneuvering tool, or that it is motorized. In a further variant, elastic means tending to recall the cam towards its operative position and restraining means for maintaining the cam in its inoperative position, against the action of the elastic means, are associated with each cam. When it is necessary to move a movable wall from its retracted position to its advanced position, said restraining means can be deactivated, whereby the elastic means cause the movement of the movable wall towards its advanced position. In the case of this solution, the normal breathing and swelling movements, to which the battery cells are subject during use of the battery pack, are absorbed not only by the separator layers between the cells (which can be of deformable material), but also by the elastic means associated with the cam for actuating the movable wall.

### Brief description of the figures

Further characteristics and advantages of the invention will result from the following description with reference to the attached drawings, provided by way of non-limiting example only, wherein:
Figure 1 is a plan view of a battery pack according to conventional technique,
Figure 2 is a plan view of the inner frame of the battery pack according to the invention,
Figure 3 is a sectional view along line III-III of Figure 2.
Figures 4A, 4B illustrate on an enlarged scale the detail indicated by arrow IV in Figure 3, in two different operating conditions,
Figure 5 is a variant of Figure 2,
Figure 6 is a further plan view of a battery pack according to the invention,
Figure 7 schematically illustrates the successive phases of formation of a cell stack,
Figures 8A, 8B schematically illustrate a sectional view of a compartment of the battery pack according to the invention, in two different operating conditions,
Figure 9 is a plan view of the battery pack according to the invention at the end of the assembly method,
Figure 10 is a variant of Figure 9, and
Figures 11A, 11B illustrate a variant of the solution of Figures 8A, 8B.

### Detailed description of the invention

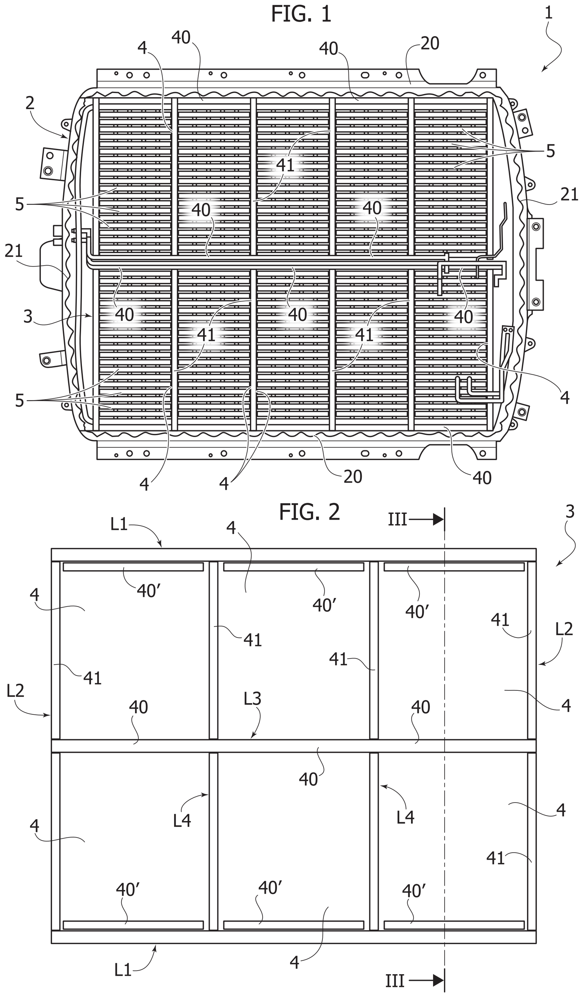

Figure 1 illustrates a plan view of an electric battery pack 1 of a conventional type including a container 2 comprising a bottom wall (not visible in Figure 1), two longitudinal side walls 20, two end side walls 21, and an upper cover (which in Figure 1 has been removed, to illustrate the internal structure of the container).

Still according to conventional technique, the battery pack 1 includes an inner frame 3, arranged within the container 2, including a plurality of walls defining a plurality of compartments 4 within the container 2. Each compartment 4 is defined by two end walls 40 and by two side walls 41.

Inside each compartment 4, a stack of battery cells 5 is arranged.

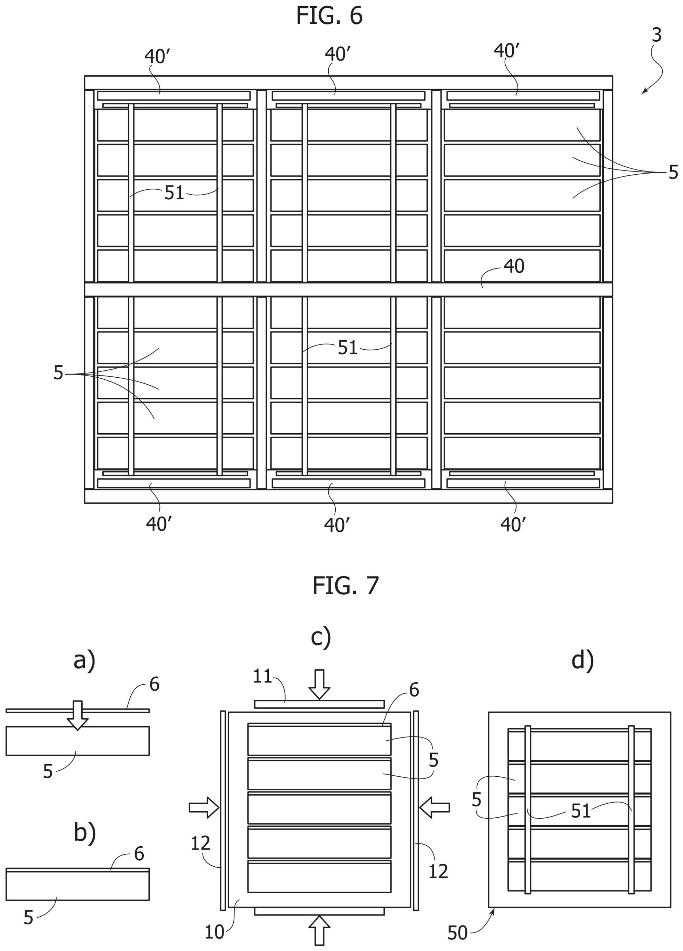

The different battery cells 5 of the same stack are separated from one another by separator layers 6, for example of deformable material, which will be further discussed below with reference to Figure 7.

The battery pack according to the invention has the same structure and the same general configuration that are illustrated in Figure 1, with the exception of a specific characteristic of the inner frame 3 of the battery pack.

Figure 2 is a simplified plan view of the inner frame 3 of a battery pack according to the invention. For illustration convenience, Figure 2 illustrates an inner frame defining two rows of three compartments 4.

Analogously to the conventional solution of Figure 1, the inner frame 3 of the battery pack according to the invention includes walls defining the compartments 4. Each compartment is defined by two end walls 40, 40', and by two side walls 41.

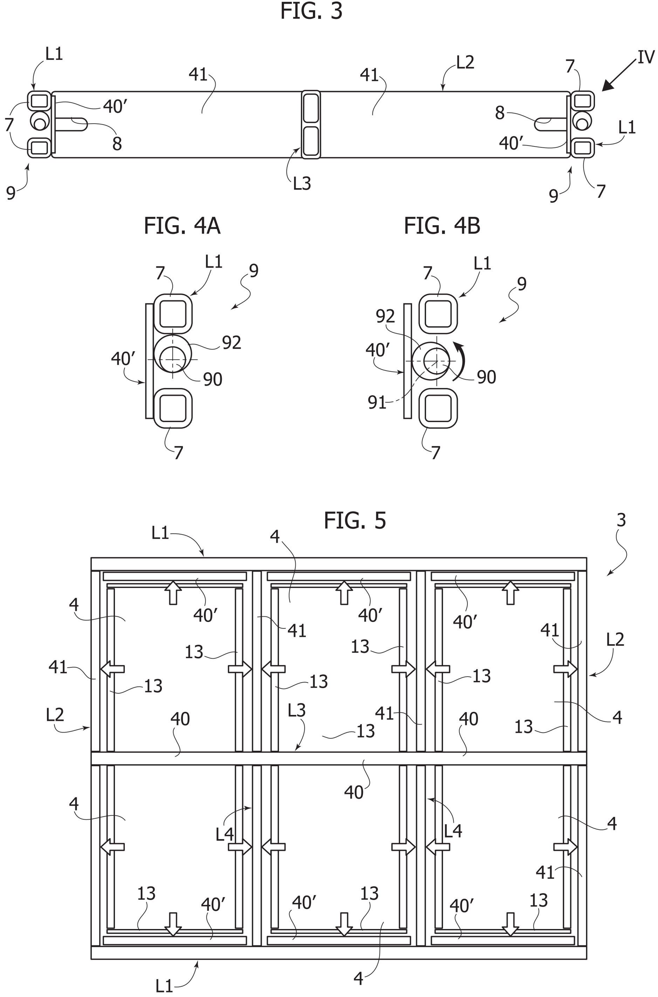

In the illustrated example, the general structure of the inner frame 2 presents two opposite longitudinal walls L1 and two opposite end walls L2. The end walls L2 define the side walls 41 of the two compartments 4 adjacent to them, while the two longitudinal walls L1 are each constituted, in the solution illustrated here by way of example only, by a pair of stringers 7, as visible in Figures 3 and 4A, 4B. These stringers have a supporting function for an actuator device forming part of the present invention, which will be described in detail below.

Still with reference to Figure 2, the inner frame 2, in the illustrated example, includes a single internal longitudinal wall L3, which defines end walls 40 of the different compartments 4, and two further internal transverse walls L4 which define side walls 41 of the compartments 4.

As visible in Figure 2, each compartment 4, defined by the inner frame 3 of the battery pack according to the invention, has an end wall 40 rigidly connected to the inner frame 3, and an opposite end wall 40' which is instead supported so as to be movable in a direction orthogonal to itself.

To this end, with reference to Figure 3, each movable wall 40' has its two sides having appendages which are slidably engaged within guide grooves 8 formed in the two side walls 41 of each compartment 4.

The movable wall 40' of each compartment 4 is movable between a retracted position, further away from the opposite end wall 40 of the same compartment, and an advanced position, closer to the opposite end wall 40 of the same compartment.

In the example illustrated here, the movement of each movable wall 40' is controlled by an actuator device 9 including a shaft 90 supported rotatably between the two stringers 7 of the respective longitudinal wall L1 in any known manner, around an axis 91, parallel and adjacent to the movable wall 40'. Each movable wall 40' is commanded by a cam 91, mounted on the rotatable shaft 90. Via the rotatable shaft 90, the cam 91 can be moved between an inoperative position (Figure 4A), in which the movable wall 40' is in its retracted position, and an operative position (Figure 4B), in which the movable wall 40' is in an advanced position.

It can be envisaged that the rotation of the rotatable shaft 9 is commanded manually, by means of a maneuvering tool, or that the shaft 9 is motorized.

Whatever the chosen solution, the provision of a movable end wall 40' in each compartment 4 allows the movable wall 40' to be arranged in a retracted position before inserting a respective cell stack into a compartment 4 of the inner frame 3. The inner frame 3 is therefore dimensioned in such a way that, when the movable wall 40' of each compartment 4 is in its retracted position, the distance between the two end walls 40, 40' of each compartment is significantly greater than the corresponding dimension of the battery cell stack that must be inserted into the compartment.

According to the invention, each battery stack is previously formed (in the manner that will be illustrated in detail below), then transported and inserted into the respective compartment 4 of the battery pack, without risk of interference with the walls of the inner frame 3, since the movable wall 40' of the compartment is maintained in its retracted position.

Once a battery cell stack has been inserted into the respective compartment 4, the actuator device 9 can be actuated to move the movable wall 40' towards its advanced position, so as to apply a pressure on the battery cell stack, which is thus maintained in position within the respective compartment.

With reference to Figure 7, each battery cell stack is preliminarily formed by means of the illustrated operations.

Figure 7a) illustrates a phase in which a separator layer 6 is joined, by gluing or welding, to each cell 5 of a plurality of battery cells, so as to form the assembly illustrated in Figure 7b).

As is evident in Figure 7, the example illustrated here refers to a battery pack using prismatic type battery cells, in which each cell has a housing with two opposite main faces, an upper wall, a bottom wall and two side walls. Nothing excludes, however, that the invention can also be applied to battery cells of a different type, for example cells of the "pouch" type.

Figure 7c) shows the formation of a stack of cells 5 (illustrated in plan view in Figure 7) on a support surface 10 of a cell stack forming station. Each cell is provided with the respective separator layer 6 previously associated therewith. The cell stack is formed by compressing it from opposite ends by pressure elements 11 by means of a pressing device of any known type. In the phase illustrated in Figure 7c), two electrically conductive bars 12 are also applied, above the cell stack 5, which are electrically connected to the terminals (not illustrated) of the cells 5.

In the method according to the invention, the cell stack is formed, as illustrated in Figure 7c), by assembling the different cells 5 with each other, but leaving them separated from one another. In this way, the times and costs of the welding operations that are provided in solutions where the different cells of each stack are joined to each other are avoided. Consequently, as illustrated in Figure 7d), once the cell stack 5, indicated as a whole by reference 50 in Figure 7d), is formed, the different cells are kept assembled with each other by temporarily applying a plurality of containment straps 51, which can be of any known type used in the packaging field.

In the preferred form of embodiment, illustrated in Figure 5, the walls of each stack 4 are coated with respective layers of expanded plastic material, indicated by 13 in Figure 5. Therefore, each compartment 4 has its walls 40, 40' and 41 coated with a layer 13, (as illustrated in Figure 5). Once the layers of expanded plastic material 13 have been applied to the walls of each compartment, and once the movable wall 40' of each compartment has been arranged in its retracted position, the different stacks 50 of cells can be positioned within the compartments 4, keeping them temporarily assembled by means of the containment straps 51. See Figure 6, which illustrates a plan view of the stacks already arranged inside the compartments 4, with the movable walls 40' in their retracted positions. Figure 6 shows two compartments in which the containment straps 51 have already been removed, while in the other compartments, the cell stacks 50 are still held by their respective containment straps 51.

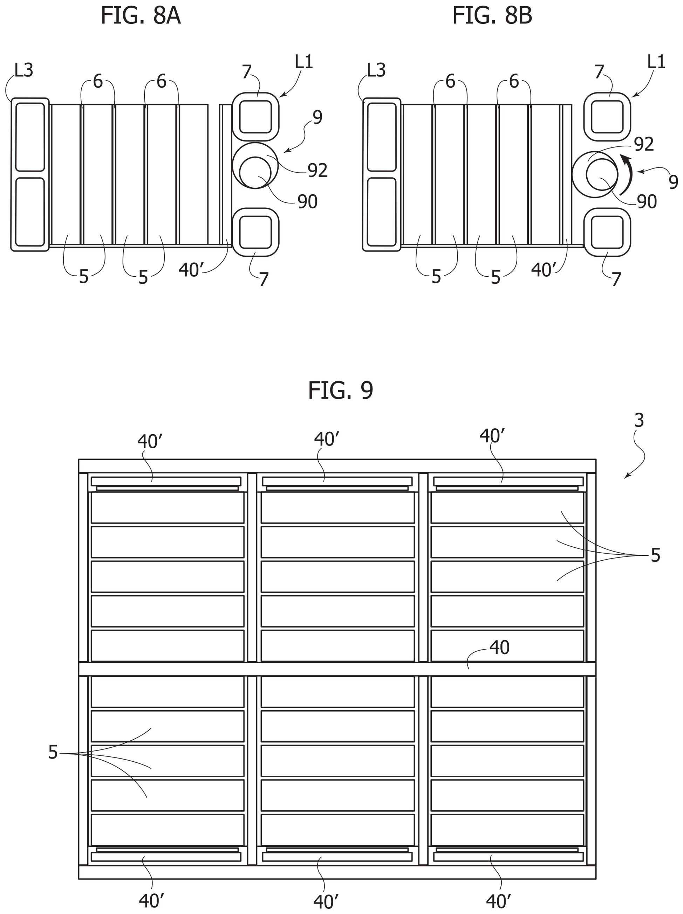

Once the containment straps 51 have been removed, the movable wall 40' of each compartment 4 can be brought from the inoperative position (Figure 8A) to the operative position (Figure 8B) so as to apply a pressure on the respective cell stack.

Figure 9 shows a plan view of the inner frame 3 with the stacks 50 arranged within it, and the movable walls 40' arranged in their advanced positions.

In the case where it is necessary to perform maintenance operations on one or more cells in the battery pack, it is necessary to remove the cover of the battery pack, bring the movable plates 40' to their retracted positions and proceed with the removal of one or more damaged stacks, or even only single cells within each stack. The maintenance operations therefore result as easy and fast.

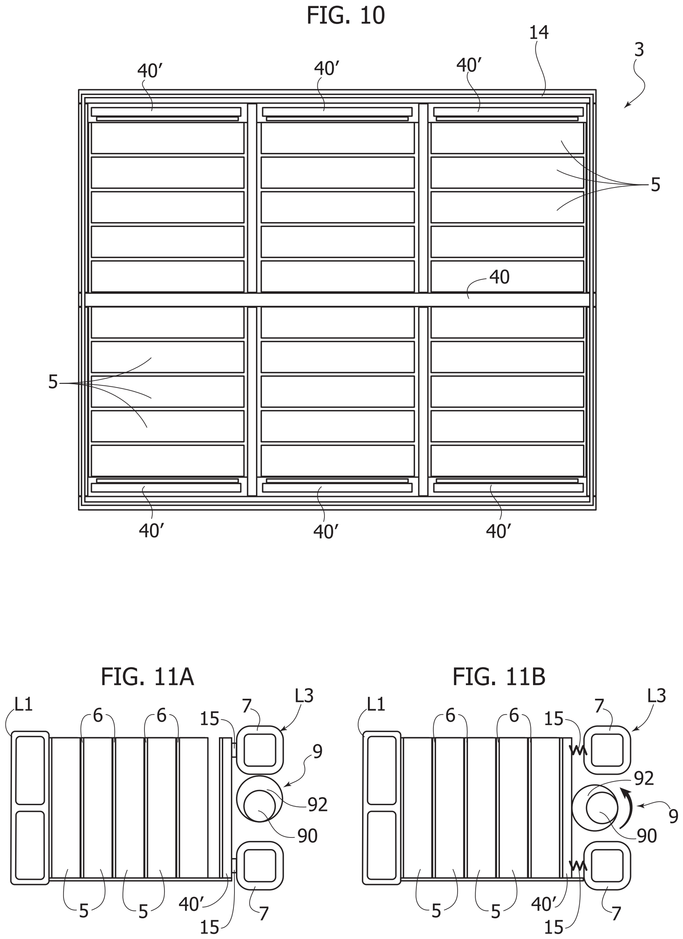

For applications with a cooling system including a cooling plate arranged inside the container 2, the frame 3 can be sealed by means of a peripheral sealing housing 14 (Figure 10). It can however be envisaged that the sealing is performed on the external container.

In the case of using an immersion type cooling system, the sealing can be performed in a manner analogous to that illustrated in Figure 10, but in this case it is also advantageous to seal the area of the actuator device 9 by applying bellows sealing elements between the movable wall 40' and the stringers 7, as illustrated in Figures 11A, 11B.

Naturally, the principle of the invention remaining firm, the construction details and the forms of embodiment may vary widely with respect to what has been described and illustrated by way of example only, without thereby departing from the scope of the present invention, as defined in the attached claims.

## Claims

1. Electric battery pack, comprising:
- a container (2), including a bottom wall, two longitudinal side walls (20) and two end side walls (21),
- an inner frame (3), arranged within the container (2) and including a plurality of walls (L1, L2, L3, 40, 40', 41) defining a plurality of compartments (4) within the container (2),
- wherein each compartment (4) is defined by two end walls (40, 40') and by two side walls (41),
- a stack (50) of battery cells (5), arranged in each of said compartments (4),
- wherein each stack (50) of battery cells (5) comprises a plurality of battery cells (5) arranged side by side with each other, within a respective compartment (4), with a separator element (6) interposed between each cell (5) and the other, and with the cells (5) at the two ends of the stack (50) facing said end walls (40, 40') of the compartment (4),
said battery pack (1) being **characterized in that** in each compartment (4) at least one of said end walls (40') of the compartment (4) is supported by said inner frame (3) in such a way as to be movable in a direction orthogonal to said end wall (40') and **in that** an actuator device (9) is associated with said movable wall (40') of each compartment (4), configured to move the movable wall (40') from a retracted position, further away from the opposite end wall (40) of the same compartment (4), towards an advanced position, in which it applies a pressure on a stack of cells (5) arranged in the respective compartment (4).

2. Battery pack according to claim 1, **characterized by** the fact that each movable wall (40') of each compartment (4) has two sides slidably engaged within guide grooves (8) of the side walls (41) of the same compartment (4).

3. Battery pack according to claim 1, **characterized by** the fact that said actuator device (9) includes a shaft (90), supported rotatably by said inner frame (3) around an axis (91), parallel and adjacent to one or more of said movable walls (40'), and a cam (92) carried by the rotatable shaft (90) in adjacency to each movable wall (40'), in such a way that the cam (92) can be rotated, via said shaft (90), between an inoperative position, in which the movable wall (40') can be positioned in its retracted position, and an operative position, in which the cam (92) engages the movable wall (40') shifting it towards its advanced position.

4. Battery pack according to claim 1, **characterized by** the fact that elastic means tending to recall the cam (92) towards its operative position, and restraining means for retaining the cam in its inoperative position, against the action of said elastic means, are associated with each cam.

5. Method for the assembly of a battery pack (1), comprising:
- providing a container (2) including a bottom wall, two longitudinal side walls (20) and two end side walls (21),
- arranging a frame (3) within the container (2), including a plurality of walls (L1, L2, L3, 40, 40', 41) defining a plurality of compartments (4) within the container (2),
- wherein each compartment (4) is defined by two end walls (40, 40') and by two side walls (41),
- positioning a stack (50) of battery cells (5) within each of said compartments (4),
- each stack (50) of battery cells (5) comprising a plurality of battery cells (5) arranged side by side with each other, within a respective compartment (4) with a separator element (6) interposed between each cell (5) and the other, and with the cells (5) at the two ends of the stack (50) facing said end walls (40, 40') of the compartment (4),
said method being **characterized by** the fact that it further comprises:
- in each compartment (4), providing at least one of said end walls (40') of the compartment in such a way that said wall is movable in a direction orthogonal to itself between a retracted position, further away from the opposite end wall (40) of the same compartment (4), and an advanced position,
- before a stack (50) of cells (5) is positioned within a compartment (4), arranging the movable wall (40') of the compartment (4) in its retracted position, so as to facilitate the positioning of a cell stack within the compartment (4),
- after the cell stack (50) has been positioned within the compartment (4), moving said movable wall (40') towards its advanced position, by means of an actuator device (9), so as to apply a pressure on the cell stack (50) in the respective compartment (4).

6. Method according to claim 5, **characterized by** the fact that a cell stack (50), before being arranged in a compartment (4) of the battery pack (1), is formed through the following operations:
- associating, to each cell (5) of a plurality of cells, a separator layer (6), by gluing or welding the separator layer (6) onto one of two opposite main faces of the cell (5),
- forming a cell stack (50) by means of said plurality of cells (5) with the respective separator layers (6), on a support surface (10) of a stack forming station, without gluing or welding the cells to each other, each cell having respective electrical terminals,
- connecting electrical connection bars (12) to the electrical terminals of the cells (5),
- applying around the cell stack (50) a plurality of containment straps (51), to keep the cell stack assembled during transport,
- moving the cells (5) from the stack forming station to a respective compartment (4) of the battery pack (1), and
- removing said plurality of straps (51) from the cell stack (50), and moving the movable wall (40') of the respective compartment (4), by means of said actuator device (9), towards its advanced position, so as to apply a pressure on the cell stack in the respective compartment.
